# EUROPEAN PATENT SPECIFICATION

(11) **EP 0 516 109 B1**
(45) Date of publication and mention of the grant of the patent: **24.05.1995**
(21) Application number: 92108991.8
(22) Date of filing: 27.05.1992
(51) Int. Cl.: B01D 19/04

(54) **Silicone defoamer composition**
Silikon-Entschäumerzusammensetzung
Composition d'antimousse à base de silicone

(30) Priority: 27.05.1991 JP 151100/91
(43) Date of publication of application: 02.12.1992
(73) Proprietor: Dow Corning Toray Silicone Company, Limited, Tokyo 103 (JP)
(72) Inventor: Harashima, Asao, c/o Dow Corning Toray, Ichihara-shi, Chiba Prefecture (JP); Kondo, Hidetoshi, c/o Dow Corning Toray, Ichihara-shi, Chiba Prefecture (JP); Nakagawa, Osamu, c/o Dow Corning Toray, Ichihara-shi, Chiba Prefecture (JP)
(74) Representative: Spott, Gottfried, Dr.

(56) References cited:
- EP-A- 0 273 448
- EP-A- 0 273 704
- US-A- 4 741 861

## Description

The present invention relates to a method of producing a silicone defoamer composition, and, more specifically, to a method of producing a silicone defoamer composition which manifests a highly persistent defoaming activity.

Silicone defoamers manifest a defoaming effect at much lower quantities of addition than do nonsilicone defoamers (e.g., alcohols, esters, mineral and plant oils, and synthetic oils) and are therefore widely employed as foam breakers and foam inhibitors in such sectors as the chemical industry, food industry, petroleum industry, textile industry, plastics industry, cement industry, and paint and adhesive industry. However, like the nonsilicone defoamers, even the silicone defoamers suffer from a rapid decline in defoaming performance when employed under alkaline conditions or in vigorously agitated systems, e.g., aeration tanks in wastewater treatment plants and jet dyeing. As a consequence, the defoamer must be intermittently refreshed, which entails severe burdens from the standpoints of cost and operation.

Numerous silicone defoamers have already been proposed in order to resolve the aforementioned problem. For example, Japanese Patent Application Laid Open [Kokai or Unexamined] Number 57-48307 [48,307/82] discloses a defoamer composition which consists of dimethylpolysiloxane, organohydrogenpolysiloxane, microparticulate silica, and condensation-reaction-accelerating catalyst. However, the quality of this defoamer composition is unstable since its viscosity is strongly subject to variations over time. Japanese Patent Application Laid Open Number 61-197007 [197,007/86] discloses a defoamer composition which consists of trimethylsiloxy-terminated dimethylpolysiloxane, vinyldimethylsiloxy-terminated dimethylpolysiloxane, hydrogendimethylsiloxy-terminated dimethylpolysiloxane, alkoxyalkylsilane, microparticulate silica, and platinum-type catalyst. This composition does in fact have a defoaming persistence superior to that of nonreactive silicone defoamers composed of dimethylpolysiloxane and silica, but the improvement is not so substantial that this composition can be classified as completely satisfactory. Japanese Patent Application Laid Open Number 63-147507 [147,507/88] discloses a method for the preparation of a silicone defoamer composition by the reaction at 50°C to 300°C of trimethylsiloxy-terminated dimethylpolysiloxane, silanol-terminated dimethylpolysiloxane, polyethyl silicate, alkali metal catalyst, and surfactant. However, because this method requires long reaction times, not only does the desired reaction occur, but re-equilibration reactions of the dimethylpolysiloxane also develop. As a result, the viscosity is subject to very large increases, and gelation occurs in extreme cases.

Aizawa et al., U.S. Patent No. 4,749,740 discloses a method of producing a silicone defoamer composition comprising reacting at a temperature of 50°C to 300°C a mixture of components which include a polyorganosiloxane fluid bearing one or more hydroxyl and/or hydrocarbonoxy groups, a resinous siloxane or a silicone silicone resin-producing silicon compound, a finely divided filler material and a catalyst to promote the reaction of the listed components. In contrast, the present invention teaches a method of producing silicone defoamer compositions by heating at a temperature of 50°C to 200°C a mixture of components which include a trimethylsiloxy-terminated dimethylpolysiloxane, a vinyldimethylsiloxy-terminated dimethylpolysiloxane, a dimethylsiloxane-methylhydrogensiloxane copolymer, (D) a trimethylsiloxysilicate, microparticulate silica, and a catalytic quantity of a platinum catalyst. The compositions produced according to this invention provide increased defoaming persistence and do not suffer from a deterioration in defoaming performance even under severe conditions such as vigorous agitation or alkaline conditions.

The present inventors achieved the present invention as the result of research directed at solving the problems reported hereinbefore. The present invention takes as its object the introduction of a silicone defoamer composition which manifests a highly durable or persistent defoaming activity wherein its defoaming performance does not decline even in the face of severe application conditions such as vigorous agitation or alkaline conditions.

According to the present invention the silicone defoamer composition of is prepared by heating at a temperature of 50°C to 200°C a mixture of: (A) a trimethylsiloxy-terminated dimethylpolysiloxane, (B) a vinyldimethylsiloxy-terminated dimethylpolysiloxane, (C) a dimethylsiloxane-methylhydrogensiloxane copolymer, and (D) a trimethylsiloxysilicate with the formula [(CH₃)₃SiO_{1/2}]ₓ·(SiO₂)_{y}, wherein x has a value from 1 to 3 and y has a value from 0.5 to 8, microparticulate silica, and a catalytic quantity of a platinum catalyst.

The present invention relates to a method of producing a silicone defoamer composition comprising heating at a temperature of 50 to 200°C a mixture of: (A) 20 to 98 weight parts trimethylsiloxy-terminated dimethylpolysiloxane with a viscosity of 5 to 50,000 centistokes (1centistoke = 1mm²/s) at 25°C, (B) 0.1 to 40.0 weight parts vinyldimethylsiloxy-terminated dimethylpolysiloxane with a viscosity of 100 to 50,000 centistokes at 25°C, (C) 0.1 to 40.0 weight parts dimethylsiloxane-methylhydrogensiloxane copolymer which contains at least 3 silicon-bonded hydrogen atoms in each molecule and which has a viscosity of 20 to 10,000 centistokes at 25°C, (D) 0.1 to 20.0 weight parts trimethylsiloxysilicate with the formula [(CH₃)₃SiO_{1/2}]ₓ·(SiO₂)_{y}, wherein x has a value of from 1 to 3 and y has a value from 0.5 to 8, (E) 1.0 to 40.0 weight parts microparticulate silica, and (F) a catalytic quantity of a platinum catalyst.

To explain the preceding in greater detail, the dimethylpolysiloxane comprising the component (A) employed by the present invention is expressed by the following general formula: 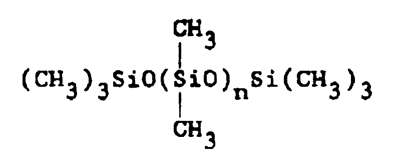
Component (A) preferably has a viscosity of 5 to 50,000 centistokes and more preferably 100 to 10,000 centistokes at 25°C. This component should be used within the range of 20 to 98 weight parts for the following reasons: the persistence of the defoaming activity is poor when 98 weight parts is exceeded, while the very development of a defoaming effect by the composition is strongly impaired at less than 20 weight parts.

The dimethylpolysiloxane comprising the component (B) employed by the present invention is expressed by the following general formula: 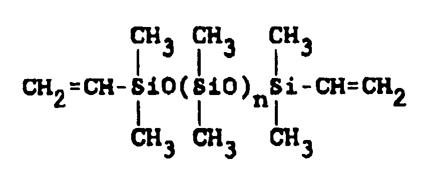
Component (B) preferably has a viscosity of 100 to 50,000 centistokes at 25°C for the following reasons: when its viscosity is less than 1,000 centistokes, the crosslink density is too high in the crosslinked structure formed with component (C) and gelation becomes a substantial risk; when its viscosity exceeds 50,000 centistokes, gelation does not occur but the viscosity of the composition becomes so high that its handling is impaired. The quantity of use for this component will be determined in correspondence to the structure of component (C). However, it should be used within the range of 0.1 to 40.0 weight parts for the following reasons: the desired defoaming persistence is not obtained at less than 0.1 weight parts; at more than 40.0 weight parts, the viscosity of the composition becomes so high that it is difficult to use in its target applications.

The dimethylsiloxane-methylhydrogensiloxane copolymer comprising the component (C) employed by the present invention has the following general formula (1) or (2): 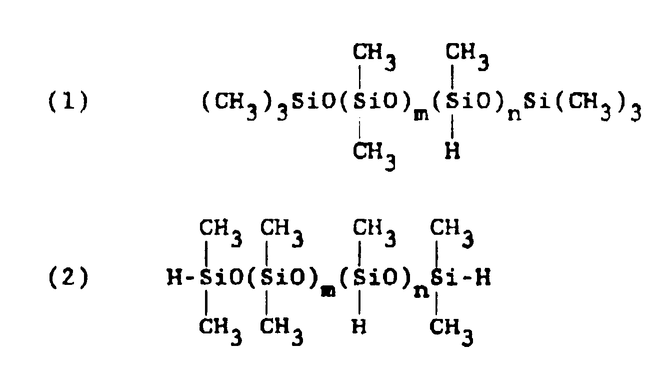
Component (C) preferably has a viscosity of 20 to 10,000 centistokes at 25°C for the following reasons: when its viscosity is less than 20 centistokes, the crosslink density is too high in the crosslinked structure formed with component (B) and gelation becomes a substantial risk; when its viscosity exceeds 10,000 centistokes, gelation does not occur but the viscosity of the composition becomes so high that its handling is impaired. Preferably subscript m has a value from 200 to 1,000 and subscript n has a value from 3 to 50 in formulas (1) and (2) hereinabove. The quantity of use for this component will be determined in correspondence to the structure of component (B). However, it should be used within the range of 0.1 to 40.0 weight parts for the following reasons: the desired defoaming persistence is not obtained at less than 0.1 weight parts; at more than 40.0 weight parts, deployment in the target applications becomes highly problematic either because the composition's viscosity is too high or due to conversion into elastomeric form.

The trimethylsiloxysilicate comprising the component (D) employed by the present invention has the following formula:
[(CH₃)₃SiO_{1/2}]ₓ·(SiO₂)_{y}, wherein x has a value from 1 to 3 and y has a value from 0.5 to 8. This compound can be produced by the cohydrolysis of tetraalkoxysilane with trimethylchlorosilane or by the cohydrolysis of water glass with trimethylchlorosilane in a toluene/water mixture. The trimethylsiloxysilicate encompassed by the above-described structure is employed in the present invention as an auxiliary in order to bring about a uniform dispersion of the microparticulate silica comprising component (E) within the matrix formed by the dimethylpolysiloxane (component (A)) and the crosslinked structure afforded by the reaction of components (B) and (C). Dispersion of the silica becomes problematic when this component is used at less than 0.1 weight parts while the defoaming performance is degraded when this component is used at more than 20 weight parts. When the value of x or y falls outside the specified range, this component will exhibit an excessive affinity for silica, or, conversely, will readily dissolve in the dimethylpolysiloxane. Since it cannot function as a dispersion auxiliary in either case, the defoaming performance and defoaming persistence of the final composition will be adversely affected in either case.

The microparticulate silica comprising the component (E) employed by the present invention is exemplified by fumed silica, silica aerogel, precipitated silica, quartz powder, fused silica, and calcined silica, and from the standpoint of the defoaming effect it preferably has a specific surface of at least 100 m²/g.

The platinum catalyst comprising the component (F) employed by the present invention is exemplified by chloroplatinic acid, alcohol compounds of chloroplatinic acid, and complexes between chloroplatinic acid and various types of olefins and vinylsiloxanes. It is employed in support of the addition reaction of the Si-CH=CH₂ in component (B) with the SiH in component (C). It should be used in a catalytic quantity, typically 0.1. to 1,000 ppm relative to the total quantities of components (A) through (E).

According to the present invention the composition can be prepared by weighing out the prescribed quantities of components (A) through (F), mixing same to homogeneity, and then beating this mixture at 50°C to 200°C for reaction. It is preferred here that the microparticulate silica comprising component (E) be preliminarily blended into the dimethylpolysiloxane comprising component (A) followed by an additional dispersing treatment in, for example, a homomixer.

When SiH groups remain in the composition according to the present invention after its heat treatment, the viscosity of the composition will have a tendency to increase. It is therefore preferred in this case that an alkali metal catalyst be added to the heat-treated composition and the composition heated in order to extinguish these unreacted SiH groups. Applicable alkali metal catalysts are exemplified by KOH, NaOH, and the alkali metal alkoxides.

The silicone defoamer composition of the aforementioned components (A) through (F)) can be prepared as a liquid, paste, dough, or powder at room temperature.

The explanation for this composition's highly persistent defoaming performance resides in the uptake of components (A) and (E) (the defoaming components) into the crosslinked structure formed by components (B) and (C). Components (A) and (E) are then gradually discharged when this composition is introduced into a foaming system.

According to the present invention the silicone defoamer composition can be deployed in various formulations in accordance with the nature of the foaming system. For example, when the foaming system is an oil or solvent system, the silicone defoamer composition can be used dispersed in a liquid having bp < 250°C at ambient pressure. When the foaming system is an aqueous system, the composition can be deployed in the form of an emulsion prepared using water and a known surfactant. Applicable surfactants in this regard are exemplified by sorbitan fatty acid esters, glycerol fatty acid esters, propylene glycol fatty acid esters, polyoxyethylene fatty acid esters, polyoxyethylene sorbitan fatty acid esters, polyoxyethylene alkyl ethers, polyoxyethylene castor oil, and ethylene oxide/propylene oxide adducts, although this list is nonlimiting. A protective colloid may also be employed in this emulsification. This protective colloid has a thickening effect, improves the stability, and has dispersing and binding properties, and it is exemplified by methylcellulose, hydroxymethylcellulose, hydroxycellulose, carboxyvinylcellulose, lactose, sodium alginate, sucrose fatty acid ester, tragacanth gum, xanthan gum, and polyvinyl alcohol, but again this list is nonlimiting. In addition, the composition can be formulated for use as a solid defoamer through its combination with protective colloid as described above, polyethylene glycol which is solid at room temperature or alkyl ether thereof, and fatty acid ester. Finally, this solid can be pulverized or ground to afford a defoamer powder.

The present invention will be explained in the following through illustrative examples. In the examples and comparison examples, part denotes weight part, the viscosity is the value measured at 25°C, and the viscosity unit of "cs" is an abbreviation for centistokes (1cs = 1mm²/s).

The persistence of the defoaming effect and the persistence of the defoaming effect in alkaline medium were tested as follows.

The foaming liquid was 100 ml of a 1.0 wt% aqueous solution of polyoxyethylene (10) octylphenyl ether (Octapol™ 100 from Sanyo Kasei Kebushiki Kaisha, Japan) placed in a capped 225 ml glass bottle. Separately, exactly 0.2 g of the silicone defoamer composition was weighed into a 50 ml measuring flask and brought to 50 ml with tert-butanol. With a pipette 0.5 ml of this solution was withdrawn and added to the foaming liquid, which was then installed in a shaker and forcibly foamed by shaking for 10 seconds. The time required for the foam to disappear was measured, and this time was taken as the index of the defoaming activity. This process was repeated, and the test was halted when more than 1 minute was required for foam extinction. The number of repetitions up to this point was taken as the index of the persistence of the defoaming activity.

To serve as the alkaline foaming liquid, 100 ml of a 0.25 wt% aqueous solution of sodium dodecylbenzenesulfonate (Neoplex™ F-25 from Kao Corp., Japan) with pH adjusted to 12 with sodium hydroxide was placed in a 225 ml capped glass bottle. Separately, exactly 0.2 g of the silicone defoamer composition was weighed into a 50 ml measuring flask and brought to 50 ml with tert-butanol. With a pipette 0.5 ml of this solution was withdrawn and added to the foaming liquid, which was then installed in a shaker and forcibly foamed by shaking for 10 seconds. The time required for the foam to disappear was measured, and this time was taken as the index of the defoaming activity. This process was repeated, and the test was halted when more than 1 minute was required for foam extinction. The number of repetitions up to this point was taken as the index of the persistence of the defoaming activity.

### Example 1

Dry-method silica (3.8 g) with a specific surface of 300 m²/g (Aerosil™ 300 from Nippon Aerosil Kabushiki Kaisha, Japan) was added to 76 g trimethylsiloxy-terminated dimethylpolysiloxane (viscosity = 1,000 cs) with preliminary mixing, and this was followed by thorough dispersion using a homomixer. This liquid dispersion was transferred to a condenser-equipped 500 cc four- neck flask, and the following were then introduced: 4.5 g alpha,omega-divinyldimethylpolysiloxane (viscosity = 372 cs) with the average structural formula: 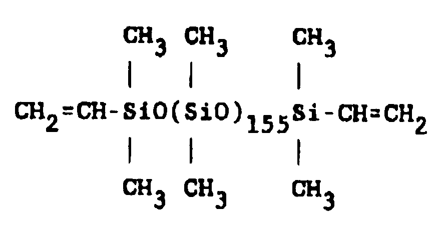
15.5 g dimethylsiloxane-methylhydrogensiloxane copolymer (viscosity = 2,650 cs) with the average structural formula: 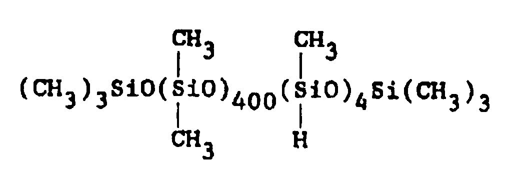
1.0 g trimethylsiloxysilicate with the formula

[(CH₃)₃SiO_{1/2}]_{0.8}·(SiO₂)_{1.0}

and 0.3 cc 2% isopropanolic chloroplatinic acid solution. A reaction was run for 3 hours with beating to 120°C. The reaction mixture was then stripped at 30 mmHg for 1 hour to remove low boilers. Cooling afforded a silicone defoamer composition with viscosity = 30,360 cs. The defoaming activity of this silicone defoamer composition was tested for persistence and persistence in alkaline medium, and these results are reported in Tables 1 and 2, respectively.

### Example 2

Dry-method silica (3.8 g) with a specific surface of 300 m²/g (Aerosil™ 300 from Nippon Aerosil Kabushiki Kaisha, Japan) was added to 76 g trimethylsiloxy-terminated dimethylpolysiloxane (viscosity = 1,000 cs) with preliminary mixing, and this was followed by thorough dispersion using a homomixer. This liquid dispersion was transferred to a condenser-equipped 500 cc four- neck flask, and the following were then introduced: 4.5 g alpha,omega-divinyldimethylpolysiloxane (viscosity = 372 cs) with the average structural formula: 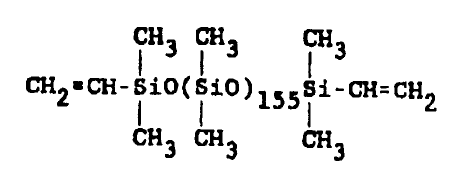
15.5 g dimethylsiloxane-methylhydrogensiloxane copolymer (viscosity = 2,650 cs) with the average structural formula: 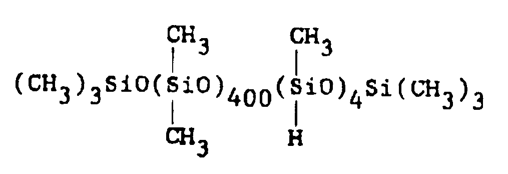
1.0 g trimethylsiloxysilicate with the formula:

[(CH₃)₃SiO_{1/2}]_{0.8}·(SiO₂)_{1.0}

and 0.3 cc 2% isopropanolic chloroplatinic acid solution. A reaction was run for 3 hours with heating to 120°C. Potassium hydroxide (0.5 g) was then dropped into the reaction mixture, the temperature was raised to 180°C, and this temperature was subsequently maintained for 3 hours. Thereafter the low boilers were removed by stripping for 1 hour at 30 mmHg. Cooling afforded a silicone defoamer composition with viscosity = 13,000 cs. The defoaming activity of this silicone defoamer composition was tested for persistence and persistence in alkaline medium, and these results are reported in Tables 1 and 2, respectively.

### Comparison Example 1

Dry-method silica (5.0 g, Nipsil™ LP from Nippon Silica Kabushiki Kaisha, Japan) was added to 74 g of the dimethylpolysiloxane with viscosity = 1,000 cs with preliminary mixing, and this was followed by thorough dispersion using a homomixer. This liquid dispersion was transferred to a condenser-equipped 500 cc four- neck flask, and the following were then introduced: 8.7 g alpha,omega-divinyldimethylpolysiloxane (viscosity = 372 cs) with the average structural formula: 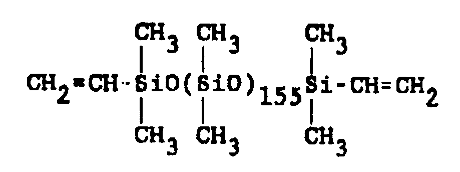
11.3 g dimethylpolysiloxane (viscosity = 2,650 cs) with the average structural formula: 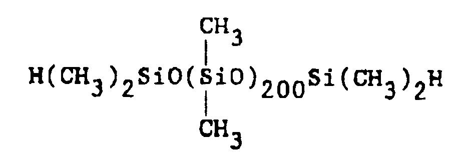
1.0 g dimethyldimethoxysilane, and 0.3 cc 2% isopropanolic chloroplatinic acid solution. The reaction was heated to 120°C and held at this temperature for 3 hours, and then stripped at 30 mmHg for 1 hour. Cooling afforded a defoamer composition with viscosity = 65,540 cs. The defoaming activity of this silicone defoamer composition was tested for persistence and persistence in alkaline medium, and these results are reported in Tables 1 and 2, respectively.

### Comparison Example 2

The following were introduced into a 500 cc four-neck flask and heated with stirring to 130°C: 65 g dimethylpolysiloxane (1,000 cs), 27 g alpha,omega-dihydroxydimethylpolysiloxane (12,500 cs), 2.7 g polyethyl silicate, and 1.0 g polyoxyethylene (10)/polyoxypropylene (40) copolymer. When the temperature reached 130°C, 1.5 g potassium hydroxide was added with stirring until homogeneously dissolved. Then, 2.7 g dry-method silica with specific surface = 200 m²/g (Aerosil™ 200 from Nippon Aerosil Kabushiki Kaisha, Japan) and 4.5 g alpha,omega- dimethylpolysiloxane were added with stirring followed by dispersion to homogeneity using a homomixer. The reaction was thereafter continued for 4 hours at 180°C with stirring. This was followed by treatment in vacuo at 30 mmHg/180°C for 1 hour. Cooling finally afforded a defoamer composition with viscosity = 80,000 cs. The defoaming activity of this silicone defoamer composition was tested for persistence and persistence in alkaline medium, and these results are reported in Tables 1 and 2, respectively.

### Comparison Example 3

Trimethylsiloxy-terminated dimethylpolysiloxane (100 g) with viscosity = 1,000 cs was stirred for 30 minutes in a Hobart mixer with 6 g dry-method hydrophobic silica (Aerosil™ R972 from Nippon Aerosil Kabushiki Kaisha, Japan), transferred to a 500 cc beaker set on a heater, and stirred and mixed for 2 hours at 120°C. Cooling afforded a defoamer composition. The defoaming activity of this silicone defoamer composition was tested for persistence and persistence in alkaline medium, and these results are reported in Tables 1 and 2, respectively.

**Table 1**

| DEFOAMING ACTIVITY AND PERSISTENCE OF DEFOAMING ACTIVITY | | | | | |
|---|---|---|---|---|---|
| | Foam Extinction Time (seconds) | | | | |
| Number of Times in the Persistence Test | Example 1 | Example 2 | Comp. Example 1 | Comp. Example 2 | Comp. Example 3 |
| 1 | 5 | 5 | 5 | 5 | 5 |
| 5 | 5 | 5 | 10 | 8 | >65 |
| 10 | 5 | 5 | 15 | 15 | |
| 14 | 6 | 5 | >60 | 25 | |
| 20 | 10 | 8 | | 20 | |
| 23 | 12 | 10 | | >60 | |
| 30 | 20 | 15 | | | |
| 35 | 20 | 13 | | | |

**Table 2**

| DEFOAMING ACTIVITY AND PERSISTENCE OF DEFOAMING ACTIVITY IN AN ALKALINE MEDIUM | | | | | |
|---|---|---|---|---|---|
| | Foam Extinction Time (seconds) | | | | |
| Number of Times in the Persistence Test | Example 1 | Example 2 | Comp. Example 1 | Comp. Example 2 | Comp. Example 3 |
| 1 | 3 | 2 | >60 | 4 | >60 |
| 2 | 6 | 3 | | 6 | |
| 3 | 8 | 3 | | 8 | |
| 4 | 16 | 4 | | 11 | |
| 5 | 39 | 5 | | 11 | |
| 6 | 60 | 20 | | 36 | |
| 7 | 49 | 60 | | 60 | |
| 8 | 60 | 60 | | >60 | |
| 9 | 60 | 60 | | | |
| 10 | >60 | 60 | | | |

Because the silicone defoamer composition produced according to the present invention comprises the mixture of components (A) through (F) which has been heated at 50 to 200°C, it is characterized by an excellent defoaming persistence and does not suffer from a deterioration in defoaming performance even under severe conditions such as vigorous agitation or alkaline conditions.

## Claims

1. A method of producing a silicone defoamer composition comprising heating at a temperature of 50°C to 200°C a mixture of:
(A) 20 to 98 weight parts trimethylsiloxy-terminated dimethylpolysiloxane having a viscosity of 5 to 50,000 centistokes (mm²/s) at 25° C;
(B) 0.1 to 40.0 weight parts vinyldimethylsiloxy-terminated dimethylpolysiloxane having a viscosity of 100 to 50,000 centistokes (mm²/s) at 25°C;
(C) 0.1 to 40.0 weight parts dimethylsiloxanemethylhydrogensiloxane copolymer having at least 3 silicon-bonded hydrogen atoms per molecule and having a viscosity of 20 to 10,000 centistokes (mm²/s) at 25°C;
(D) 0.1 to 20.0 weight parts trimethylsiloxysilicate having the formula:
[(CH₃)₃SiO_{1/2}]_{x·}(SiO₂)_{y}
wherein x has a value from 1 to 3 and y has a value from 0.5 to 8;
(E) 1.0 to 40.0 weight parts microparticulate silica; and
(F) a catalytic quantity of a platinum catalyst.

2. A method according to Claim 1, comprising adding an alkali metal catalyst to said mixture after said heating.

3. A method according to Claim 1, wherein said method additionally comprises adding to said mixture water and at least one surfactant.

4. A method according to Claim 3, wherein said method additionally comprises adding a protective colloid to said mixture.

5. A method according to Claim 4, wherein said method additionally comprises adding a polyethylene glycol compound and a fatty acid ester compound.

6. A process of controlling foam, which includes the addition of a foam control agent to a medium, characterized by using as the foam control agent a silicone defoamer composition prepared by heating at a temperature of 50°C to 200°C a mixture of:
(A) 20 to 98 weight parts trimethylsiloxy-terminated dimethylpolysiloxane having a viscosity of 5 to 50,000 centistokes (mm²/s) at 25° C;
(B) 0.1 to 40.0 weight parts vinyldimethylsiloxy-terminated dimethylpolysiloxane having a viscosity of 100 to 50,000 centistokes (mm²/s) at 25°C;
(C) 0.1 to 40.0 weight parts dimethylsiloxanemethylhydrogensiloxane copolymer having at least 3 silicon-bonded hydrogen atoms per molecule and having a viscosity of 20 to 10,000 centistokes (mm²/s) at 25°C;
(D) 0.1 to 20.0 weight parts trimethylsiloxysilicate having the formula:
[(CH₃)₃SiO_{1/2}]_{x·}(SiO₂)_{y}
wherein x has a value from 1 to 3 and y has a value from 0.5 to 8;
(E) 1.0 to 40.0 weight parts microparticulate silica; and (F) a catalytic quantity of a platinum catalyst.

## Patentansprüche

1. Verfahren zur Herstellung einer Siliconentschäumerzusammensetzung umfassend, daß man eine Mischung aus
(A) 20 bis 98 Gewichtsteilen eines Dimethylpolysiloxans mit Trimethylsiloxyendgruppen mit einer Viskosität von 5 bis 50 000 Centistoke (mm²/s) bei 25°C;
(B) 0,1 bis 40,0 Gewichtsteilen eines Dimethylpolysiloxans mit Vinyldimethylsiloxyendgruppen mit einer Viskosität von 100 bis 50 000 Centistoke (mm²/s) bei 25°C;
(C) 0,1 bis 40,0 Gewichtsteilen Dimethylsiloxan-Methylhydrogensiloxan-Copolymer mit mindestens drei siliziungebundenen Wasserstoffatomen pro Molekül und einer Viskosität von 20 bis 10 000 Centistoke (mm²/s) bei 25°C;
(D) 0,1 bis 20,0 Gewichtsteilen Trimethylsiloxysilicat mit der Formel:
[(CH₃)₃SiO_{1/2}]ₓ·(SiO₂)_{y},
worin x einen Wert von 1 bis 3 hat und y einen Wert von 0,5 bis 8 hat;
(E) 1,0 bis 40,0 Gewichtsteilen mikroteilchenförmigem Siliziumdioxid und
(F) einer katalytischen Menge eines Platinkatalysators auf eine Temperatur von 50 bis 200°C erhitzt.

2. Verfahren nach Anspruch 1 umfassend, daß man einen Alkalikatalysator zu der Mischung nach dem Erhitzen zugibt.

3. Verfahren nach Anspruch 1, worin das Verfahren zusätzlich umfaßt, daß man der Mischung Wasser und mindestens ein Tensid zugibt.

4. Verfahren nach Anspruch 3, worin das Verfahren zusätzlich umfaßt, daß man ein Schutzkolloid zu der Mischung zugibt.

5. Verfahren nach Anspruch 4, worin das Verfahren zusätzlich umfaßt, daß man eine Polyethylenglycolverbindung und eine Fettsäureesterverbindung zugibt.

6. Verfahren zur Kontrolle von Schaum, das die Zugabe eines Schaumkontrollmittels zu einem Medium einschließt, dadurch gekennzeichnet, daß als Schaumkontrollmittel eine Siliconentschäumerzusammensetzung verwendet wird, die hergestellt wurde, indem eine Mischung aus
(A) 20 bis 98 Gewichtsteilen eines Dimethylpolysiloxans mit Trimethylsiloxyendgruppen mit einer Viskosität von 5 bis 50 000 Centistoke (mm²/s) bei 25°C;
(B) 0,1 bis 40,0 Gewichtsteilen eines Dimethylpolysiloxans mit Vinyldimethylsiloxyendgruppen mit einer Viskosität von 100 bis 50 000 Centistoke (mm²/s) bei 25°C;
(C) 0,1 bis 40,0 Gewichtsteilen Dimethylsiloxan-Methylhydrogensiloxan-Copolymer mit mindestens drei siliziumgebundenen Wasserstoffatomen pro Molekül und einer Viskosität von 20 bis 10 000 Centistoke (mm²/s) bei 25°C;
(D) 0,1 bis 20,0 Gewichtsteilen Trimethylsiloxysilicat mit der Formel:
[(CH₃)₃SiO_{1/2}]ₓ·(SiO₂)_{y},
worin x einen Wert von 1 bis 3 hat und y einen Wert von 0,5 bis 8 hat;
(E) 1,0 bis 40,0 Gewichtsteilen mikroteilchenförmigem Siliziumdioxid und
(F) einer katalytischen Menge eines Platinkatalysators auf eine Temperatur von 50 bis 200°C erhitzt wird.

## Revendications

1. Procédé d'obtention d'une composition d'agent antimousse à base de silicone, comprenant le chauffage, à une température de 50°C à 200°C, d'un mélange de :
(A) 20 à 98 parties en poids d'un diméthylpolysiloxane à terminaison triméthylsiloxy ayant une viscosité de 5 à 50 000 mm²/s à 25°C ;
(B) 0,1 à 40,0 parties en poids d'un diméthylpolysiloxane à terminaison vinyldiméthylsiloxy ayant une viscosité de 100 à 50 000 mm²/s à 25°C ;
(C) 0,1 à 40,0 parties en poids d'un copolymère de diméthylsiloxane-méthylhydrogénosiloxane ayant au moins 3 atomes d'hydrogène liés au silicium par molécule et ayant une viscosité de 20 à 10 000 mm²/s à 25°C ;
(D) 0,1 à 20,0 parties en poids d'un triméthylsiloxysilicate répondant à la formule :
[(CH₃)₃SiO_{1/2}]ₓ.(SiO₂)_{y}
où x a une valeur de 1 à 3, et y a une valeur de 0,5 à 8 ;
(E) 1,0 à 40,0 parties en poids de microparticules de silice ; et
(F) une quantité catalytique d'un catalyseur à base de platine.

2. Procédé selon la revendication 1, comprenant l'addition d'un catalyseur à base de métal alcalin audit mélange après ledit chauffage.

3. Procédé selon la revendication 1, comprenant, en outre, l'addition d'eau et d'au moins un agent tensio-actif audit mélange.

4. Procédé selon la revendication 3, comprenant, en outre, l'addition d'un colloïde de protection audit mélange.

5. Procédé selon la revendication 4, comprenant, en outre, l'addition d'un composé polyéthylèneglycol et d'un composé du type ester d'acide gras.

6. Procédé pour maîtriser la formation de mousse, comprenant l'addition d'un agent maîtrisant la formation de mousse à un milieu, caractérisé en ce qu'on utilise, comme agent maîtrisant la formation de mousse, une composition d'agent antimousse à base de silicone, qu'on prépare en chauffant, à une température de 50°C à 200°C, un mélange de :
(A) 20 à 98 parties en poids d'un diméthylpolysiloxane à terminaison triméthylsiloxy ayant une viscosité de 5 à 50 000 mm²/s à 25°C ;
(B) 0,1 à 40,0 parties en poids d'un diméthylpolysiloxane à terminaison vinyldiméthylsiloxy ayant une viscosité de 100 à 50 000 mm²/s à 25°C ;
(C) 0,1 à 40,0 parties en poids d'un copolymère de diméthylsiloxane-méthylhydrogénosiloxane ayant au moins 3 atomes d'hydrogène liés au silicium par molécule et ayant une viscosité de 20 à 10 000 mm²/s à 25°C ;
(D) 0,1 à 20,0 parties en poids d'un triméthylsiloxysilicate répondant à la formule :
[(CH₃)₃SiO_{1/2}]ₓ.(SiO₂)_{y}
où x a une valeur de 1 à 3, et y a une valeur de 0,5 à 8 ;
(E) 1,0 à 40,0 parties en poids de microparticules de silice ; et
(F) une quantité catalytique d'un catalyseur à base de platine.
